(19) **Europäisches Patentamt**
**European Patent Office**
**Office européen des brevets**

(11) **EP 2 911 463 A1**

(12) **EUROPEAN PATENT APPLICATION**
published in accordance with Art. 153(4) EPC

(43) Date of publication:
**26.08.2015 Bulletin 2015/35**

(21) Application number: **13846677.6**

(22) Date of filing: **04.10.2013**

(51) Int Cl.:
**H04W 72/04** (2009.01)    **H04J 13/10** (2011.01)
**H04W 16/32** (2009.01)

(86) International application number:
**PCT/JP2013/077122**

(87) International publication number:
**WO 2014/061475 (24.04.2014 Gazette 2014/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.10.2012 JP 2012230080**

(71) Applicant: **NTT DOCOMO, INC.**
**Chiyoda-ku**
**Tokyo 100-6150 (JP)**

(72) Inventors:
• **TAKEDA, Kazuaki**
  **Tokyo 100-6150 (JP)**
• **NAGATA, Satoshi**
  **Tokyo 100-6150 (JP)**
• **KISHIYAMA, Yoshihisa**
  **Tokyo 100-6150 (JP)**
• **ISHII, Hiroyuki**
  **Palo Alto, California 94304 (US)**

(74) Representative: **Hoffmann Eitle**
**Patent- und Rechtsanwälte PartmbB**
**Arabellastraße 30**
**81925 München (DE)**

(54) **RADIO COMMUNICATION METHOD, RADIO COMMUNICATION SYSTEM, RADIO BASE STATION AND USER TERMINAL**

(57)    The present invention is designed to carry out communication adequately in a HetNet even when the radio resource region for downlink control channels is expanded. A radio communication method in a radio communication system having a macro base station that forms a macro cell and a small base station that forms a small cell such that at least part of the small cell overlaps the macro cell is provided, and the small base station performs the steps of generating specific control information of user terminals, scrambling the specific control information by using user-specific scrambling sequences, and transmitting the specific control information to user terminals in the small cell by using an enhanced downlink control channel that is frequency-division-multiplexed with a downlink shared data channel.

FIG.4

**Description**

Technical Field

The present invention relates to a radio communication method, a radio communication system, a radio base station and a user terminal in a next-generation mobile communication system in which a macro cell and a small cell are placed to overlap each other at least in part.

Background Art

In a UMTS (Universal Mobile Telecommunications System) network, long-term evolution (LTE) is under study for the purposes of further increasing high-speed data rates, providing low delay and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Also, successor systems of LTE (which may be referred to as, for example, "LTE-advanced" or "LTE enhancement" (hereinafter "LTE-A")) are under study for the purpose of achieving further broadbandization and increased speed beyond LTE. In the LTE-A system, a HetNet (Heterogeneous Network), in which a small cell (for example, a pico cell, a femto cell and so on) having a local coverage area of a radius of approximately several tens of meters is formed in a macro cell having a wide coverage area of a radius of approximately several kilometers, is under study (see, for example, non-patent literature 1).

Citation List

Non-Patent Literature

Non-Patent Literature 1: 3GPP TR 25.913 "Requirements for Evolved UTRA and Evolved UTRAN"

Summary of Invention

Technical Problem

The above HetNet refers to a radio communication system in which a macro cell and a small cell are placed to overlap each other geographically at least in part. Consequently, it is desirable to carry out interference coordination (eICIC: enhanced Inter-Cell Interference Coordination) in order to reduce the interference between the macro cell and the small cell.

Also, regarding future systems such as LTE-A, multiple-user MIMO (MU-MIMO) transmission, in which transmission information sequences for different users are allocated to the same resources and transmitted from multiple transmitting antennas, is under study. This MU-MIMO transmission may be applicable to HetNets and CoMP (Coordinated Multi-Point) transmission as well. Meanwhile, in such future systems, there is a threat that the characteristics of the systems such as MU-MIMO transmission cannot be fully optimized due to the shortage of the capacity of downlink control channels that transmit downlink control information.

So, a study is in progress to expand the radio resource regions for downlink control channels and transmit more downlink control information. For example, it may be possible to transmit downlink control information in the radio resource region for a downlink shared data channel. Consequently, in a HetNet, there is a demand for a communication method that is adequate when transmitting downlink control information by using the radio resource region for a downlink shared data channel.

The present invention has been made in view of the above, and it is therefore an object of the present invention to provide a radio communication method, a radio communication system, a radio base station and a user terminal whereby, it is possible to carry out communication adequately in a HetNet even when the radio resource region for a downlink control channels is expanded.

Solution to Problem

The radio communication method of the present invention is a radio communication method in a radio communication system having a macro base station that forms a macro cell and a small base station that forms a small cell such that at least part of the small cell overlaps the macro cell, and this radio communication method includes, in the small base station, the steps of: generating specific control information of user terminals; scrambling the specific control information by using user-specific scrambling sequences; and transmitting the specific control information to user terminals in the small cell by using an enhanced downlink control channel that is frequency-division-multiplexed with a downlink shared data channel.

Advantageous Effects of Invention

According to the present invention, it is possible to carry out communication adequately in a HetNet even when the radio resource region for a downlink control channels is expanded.

Brief Description of Drawings

FIG. 1 is a conceptual diagram of a HetNet;
FIG. 2 provides diagrams to show examples of an enhanced PDCCH frame structure;
FIG. 3 is a diagram to show an example of transmission when user-specific control information is scrambled using the cell IDs of small base stations;
FIG. 4 is a diagram to show an example of transmission of user-specific control information according to the present embodiment;
FIG. 5 is a diagram to show an example of a structure and arrangement of discovery signals;
FIG. 6 is a diagram to show an example of transmission of user-common control information according to the present embodiment;
FIG. 7 provides diagrams to show examples of enhanced PDCCH sets;
FIG. 8 is a diagram to show an example of transmission of user-specific control information and user-common control information according to the present embodiment;
FIG. 9 is a schematic diagram to show an example of a radio communication system according to the present embodiment;
FIG. 10 is a diagram to explain an overall structure of a small base station according to the present embodiment;
FIG. 11 is a diagram to explain an overall structure of a user terminal according to the present embodiment;
FIG. 12 is a function structure diagram to show a baseband processing section in a small base station according to the present embodiment, and
part of higher layers; and
FIG. 13 is a function structure diagram of a baseband processing section in a user terminal according to the present embodiment.

Description of Embodiments

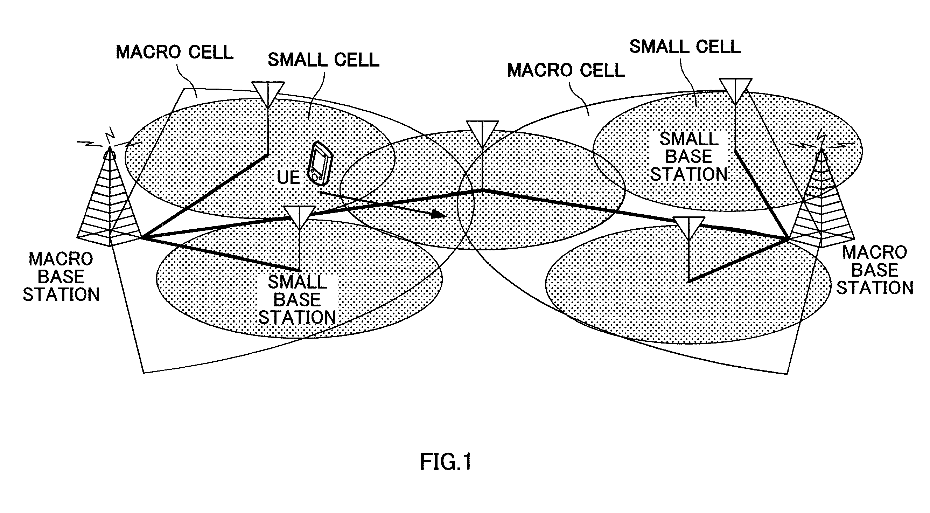

FIG. 1 is a conceptual diagram of a HetNet. As illustrated in FIG. 1, a HetNet includes radio base stations that form macro cells (hereinafter referred to as "macro base stations"), radio base stations that form small cells (hereinafter referred to as "small base stations"), and user terminals (UE: User Equipment) that connect with the macro base stations and/or the small base stations. Note that a macro base station may be referred to as an "eNodeB (eNB)," a "macro eNB (MeNB)," a "transmission point" and so on. Also, a small base station may be referred to as a "pico eNB," a "femto eNB," a transmission point and so on.

A macro cell is a cell to have a relatively wide coverage (for example, a radius of approximately 10 km), and may be referred to as a "wide area" and so on, and may be a sector as well. Also, a small cell is a cell to have a local coverage (for example, a radius of approximately several tens of meters), and may be referred to as a "local area," a "pico cell," a "nano cell," a "femto cell," a "micro cell," an "eLA (enhanced Local Area) cell" and so on.

As illustrated in FIG. 1, in a HetNet, macro base stations and small base stations are placed so that the macro cells and each small cell geographically overlap each other at least in part. The macro base stations and each small base station are connected, for example, via a wired link such as optical fiber, an X2 interface and so on, but may be connected via a wireless link as well.

Now, it is an important requirement in radio access technology to achieve increased capacity in order to accommodate traffic that has been growing rapidly due to the spread of smart phones in recent years and so on. Consequently, as illustrated in FIG. 1 above, a study is in progress to realize broadbandization beyond 100 MHz by using high frequency band regions and also build up a high-density network. In particular, enhancement of radio access technology in local areas using small cells is likely to be of greater significance in the future.

As one variation of radio access technology that is under study at present, there is a macro-assisted access scheme, which achieves increased capacity with small cells (small base stations) while securing coverage with a macro cell (macro base station). According to the macro-assisted access scheme, for example, a macro cell establishes the C-plane using a conventional frequency band and maintains connectivity and mobility, and small cells establish the U-plane and transmit user data selectively, so that high throughput is achieved.

Also, a study is in progress to, in small cells, reduce the interval of inserting CRSs (Cell-specific Reference Signals) or not allocate CRSs, or use a subframe structure (NCT: New Carrier Type) in which no conventional downlink control channel (PDCCH) is allocated. By using this subframe structure in small cells, it is possible to reduce interference effectively and also reduce the overhead. Note that a cell to use the new carrier type may be referred to as a "phantom cell" so as to draw distinction from a conventional cell.

For this macro-assisted access scheme, a structure to allow a user terminal to communicate without being conscious of small cells is preferable, in order to reduce the higher layer signaling required for handover between small cells.

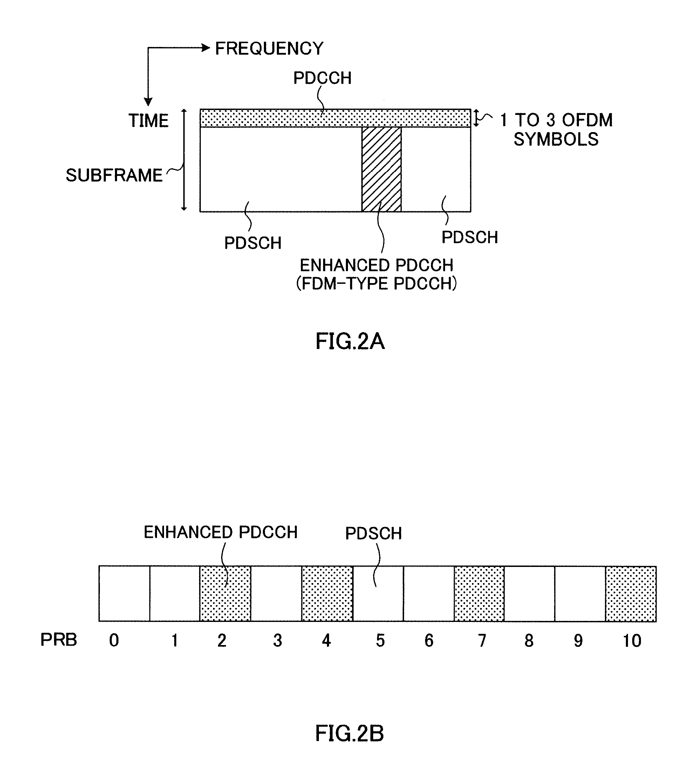

Now, in systems of LTE Rel. 11 and later versions, a study is in progress to expand the radio resource region for downlink control channels and transmit more downlink control information, in order to secure the capacity of downlink control channels that transmit downlink control information. To be more specific, it may be possible to expand the region for allocating PDCCHs to outside the control region that is maximum three OFDM symbols from the top of a subframe (that is, expand the PDCCH region into the conventional PDSCH region, which is from the fourth OFDM symbol onward). As for the method of expanding the PDCCH region, there is a method of frequency-division-multiplexing the PDSCH and the PDCCH in the conventional PDSCH region as shown in FIG. 2A (FDM approach).

In the FDM approach shown in FIG. 2A, the PDCCH is placed in part of the system band over all of the OFDM symbols from the fourth and later OFDM symbol in the subframe. This PDCCH, frequency-division-multiplexed with the PDSCH in the FDM approach, is demodulated using demodulation reference signals (DM-RSs), which are user-specific reference signals. Consequently, DCI that is transmitted in this PDCCH can achieve beam-forming gain, like downlink data that is transmitted in the PDSCH, and therefore this is effective to increase the capacity of the PDCCH.

Also, as noted earlier, a new carrier type (extension carrier) that does not place the conventional PDCCH in a predetermined number of OFDM symbols (maximum three OFDM symbols) from the top of a subframe is under study. In subframes of this new carrier type, it is possible to allocate enhanced PDCCHs and PDSCH, including the region of maximum three OFDM symbols from the top. For example, as illustrated in FIG. 2B, in all of the OFDM symbols constituting a subframe, enhanced PDCCHs are allocated to PRBs (here PRBs 2, 4, 7 and 10) in part of the system band, and the PDSCH is allocated to the rest of the PRBs.

Information of radio resources (for example, PRB pairs, RBGs and so on) where enhanced PDCCHs are allocated is reported from a radio base station to user terminals by higher layer signaling (for example, RRC signaling). Based on the information reported, the user terminals demodulate user data (PDSCH signal) using the control information (DCI) contained in the enhanced PDCCHs.

Now, in the HetNet shown in FIG. 1, it may be possible to randomize interference by using different scrambling sequences and interleaving patterns on a per cell basis, in order to reduce interference between varying cells. Note that the interleaving patterns may include the shift patterns to use in cyclic shifting, frequency offset values and/or the like.

For example, scrambling sequences (initial scrambling values) in conventional PDCCH signals, utilizing cell-specific information, are defined based on equation 1. Also, the shift patterns of cell-specific information are defined based on, for example, equation 2.

$$c_{\mathrm{init}} = \left\lfloor n_{\mathrm{s}}/2 \right\rfloor \cdot 2^9 + N_{\mathrm{ID}}^{\mathrm{cell}} \qquad \dots \text{(Equation 1)}$$

$$\overline{w}^{(p)}(i) = w^{(p)}\!\left((i + N_{\mathrm{ID}}^{\mathrm{cell}}) \bmod M_{\mathrm{quad}}\right) \qquad \dots \text{(Equation 2)}$$

In equations 1 and 2,

$N_{\mathrm{ID}}^{\mathrm{cell}}$ is the cell-specific information (cell ID), which varies per cell. Based on this cell ID, cell-specific scrambling sequences, shift patterns and so on are generated. By this means, different scrambling sequences and shift patterns are used between cells with varying cell IDs, so that it is possible to randomize (make uniform) the interference between the PDCCHs.

Similarly, as for other downlink control signals such as the PCFICH signal and the PHICH signal, it is possible to randomize the interference by using cell-specific scrambling sequences, interleaving patterns (which include frequency offset values and/or the like).

Consequently, similar to control information such as the conventional PDCCH, it is possible to apply scrambling sequences and interleaving patterns (including frequency offset values and so on) that utilize cell-specific information to the enhanced PDCCHs illustrated in above FIG. 2 above as well.

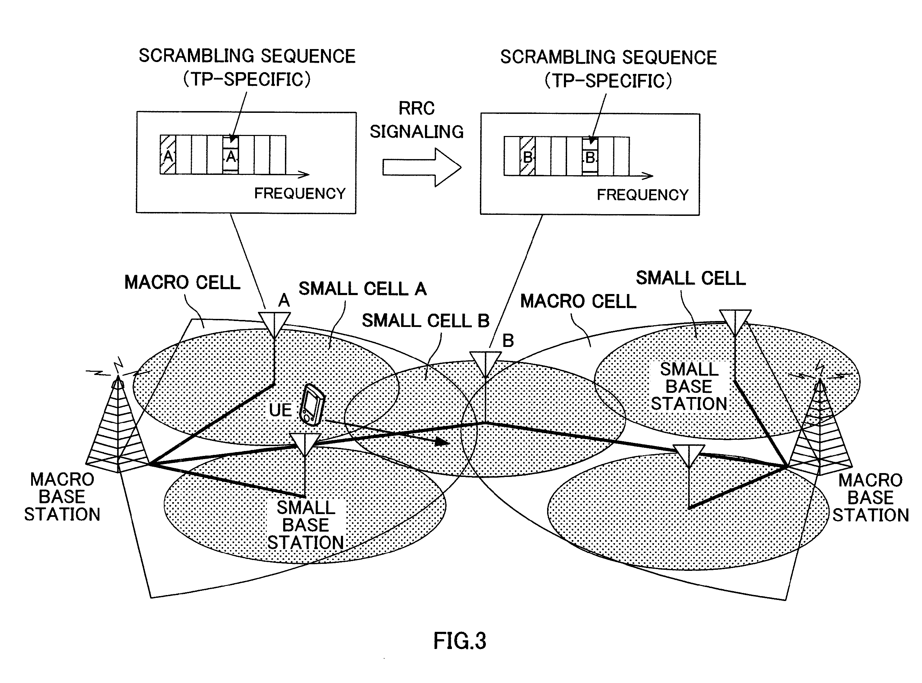

However, referring to FIG. 1, when the radio resources for enhanced PDCCHs and cells IDs are configured on a per small cell basis, it becomes necessary to report information of the enhanced PDCCH resources and so on by higher layer signaling (for example, RRC signaling), when a user terminal moves between small cells in a macro cell (see FIG. 3). As a result, when a user terminal moves between a plurality of small cells frequently, the number of times to send reports by higher layer signaling increases, which makes effective use of radio resources difficult. In this way, when the radio resources for enhanced PDCCHs and cell IDs are configured on a per small cell basis, a user terminal has to be always conscious of the small cells and communicate.

On the other hand, when common resources for enhanced PDCCHs and cell IDs are configured with respect to small cells in a macro cell, resources and scrambling sequences that are common between the small cells are used, and there is a threat that the downlink control information to be allocated to the enhanced PDCCHs might interfere with each other.

So, the present inventors have conceived of employing a structure to transmit user-specific control information from small cells (small base stations) by using predetermined enhanced PDCCHs that serve as UE-specific search spaces (UE-SSs), and scrambling this user-specific control information by using scrambling sequences that utilize information that is specific to each user. Also, the present inventors have conceived of employing a structure to configure and report information of the resources for predetermined enhanced PDCCHs in a macro base station on a per user basis.

To be more specific, the present inventors have conceived of transmitting user-specific control information, which is scrambled using user-specific scrambling sequences, from the small base stations to user terminals via predetermined enhanced PDCCHs, and reporting information about the resources of the predetermined enhanced PDCCHs from the macro base station to user terminals in the macro cell. By this means, even when the user terminals move between varying cells, it is possible to skip the higher layer signaling for reporting the enhanced PDCCH resource information, and, furthermore, reduce the interference between the enhanced PDCCHs.

Also, as for common control information that is shared between user terminals, the present inventors have conceived of controlling the initial scrambling values of the common control information and/or the positions of the enhanced PDCCH resources by using transmission point (small base station or macro base station)-specific information (offset values).

To be more specific, the small base stations (or macro base station) transmit user-common control information that is scrambled by using scrambling sequences that utilize small base station (or macro base station)-specific information (offset values), via predetermined enhanced PDCCHs that serve as common search space (CSSs). Furthermore, the present inventors have conceived of reporting the offset values from the small base stations (or macro base station) to user terminals by using discovery signals, CSI-RS configuration, or synchronization signals (PSS/SSS).

Note that the UE-specific search spaces indicate the range in which each user terminal should blind-decode the control information that is specific to the user terminal. Also, the UE-specific control information includes, for example, PDSCH allocation information (DL assignments), PUSCH scheduling information (UL grants) and so on. Also, the common search spaces indicate the range in which the user terminals in a cell should blind-decode the common control information.

Now, the present embodiment will be described below in detail with reference to the accompanying drawings.

(First Aspect)

With the first aspect, user-specific control information (user-specific enhanced PDCCH signals) is transmitted from small cells (small base stations) to user terminals. The user-specific control information is allocated to the UE-specific search spaces configured in the enhanced PDCCHs. That is to say, from the small cells, user data (PDSCH signal) and user-specific enhanced PDCCH signals can be transmitted.

Also, the small base stations scramble the user-specific control information by using scrambling sequences that utilizes information that is specific to each user (for example, C-RNTIs, newly defined UE-IDs (secondary cell UE-IDs or phantom cell UE-IDs) and so on). For example, the small base stations can correct the initial scrambling value of the downlink shared data channel (PDSCH) that is determined in advance as follows and use the corrected value:

$$c_{\text{init}} = n_{RNTI} \cdot 2^{13} + \left\lfloor n_s / 2 \right\rfloor \cdot 2^9 + N_{\text{ID}}^{\text{cell}} \qquad \dots (\text{Equation } 3)$$

$n_{\text{RNTI}}$ has only to be user-specific information, and, for example, the CRNTI, a newly defined UE-ID (secondary cell UE-ID or phantom cell UE-ID) and/or the like may be used. $n_s$ is the slot number (for example, 0 to 19). Note that the number of CRC bits in the enhanced PDCCHs is not limited to sixteen bits and can be configured as appropriate. $N_{\text{ID}}^{\text{cell}}$

can be made the macro cell ID, or a virtual cell ID. When a virtual cell ID is used, this may be reported to user terminals by using discovery signals, which will be described later. Note that, with equation 3, initial scrambling values that do not use the macro cell ID (virtual cell ID) may be defined as well.

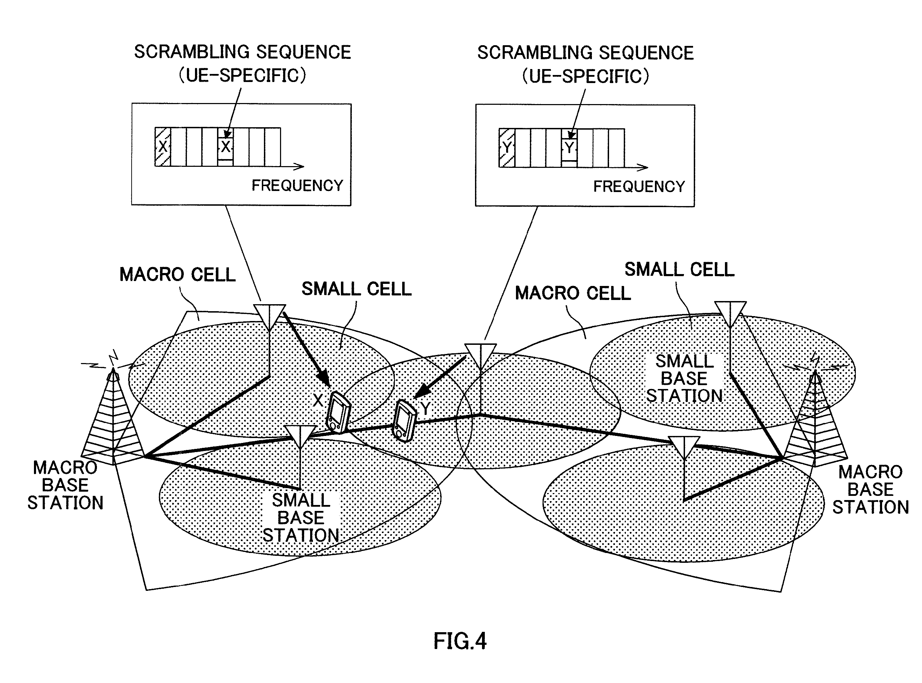

For example, as illustrated in FIG. 4, the small base stations transmit user-specific control information that is scrambled using initial scrambling values (for example, above equation 3) that utilize user-specific information, to user terminals in each small cell (here, user terminals X and Y), via predetermined enhanced PDCCHs. Meanwhile, for each of different user terminals X and Y in the macro cell, the macro base station configures the enhanced PDCCH resources for allocating the user-specific control information, and reports these enhanced PDCCH resources to each user terminal by higher layer signaling (for example, RRC signaling). Note that the macro base station may configure the same resources (for example, PRB pairs, RBGs and so on) or configure different resources for each user terminal.

By this means, even when the user terminals move between varying small cells, the enhanced PDCCH resources that are configured for each user terminal do not change, so that it is possible to make the higher layer signaling for reporting enhanced PDCCH resource information and cell IDs unnecessary. Also, each user terminal's user-specific control information is scrambled with information that is specific to each user, so that it is possible to reduce interference even when enhanced PDCCHs overlap between different user terminals.

(Second Aspect)

Transmission of common control information that is shared between user terminals will be described with a second aspect.

As for common control information that is shared between user terminals, offset values are used as transmission point (small base station or macro base station)-specific information, and the initial scrambling values of the common control information and/or the positions of the enhanced PDCCH resources where the common control information is allocated are controlled.

For example, the small base stations perform the scrambling process of common control information that is allocated to predetermined enhanced PDCCHs that serve as common search spaces (CSSs), by using scrambling sequences that utilize small base station-specific information (for example, virtual cell IDs).

For example, a transmission point can define the initial scrambling value of common control information using following equation 4.

$$c_{\text{init}} = \left\lfloor n_s/2 \right\rfloor \cdot 2^9 + N_{\text{ID}}^{\text{cell}} \qquad \dots (\text{Equation 4})$$

$N_{\text{ID}}^{\text{cell}}$ can be made the macro cell ID, or a virtual cell ID.

When virtual cell IDs are used as transmission point-specific offset values, the offset values can be reported to user terminals by using discovery signals (for example, orthogonal resource indices). Also, it is possible to report the offset values to user terminals by using the configuration of the channel state information estimation reference signal (CSI-RS configuration). Besides, it is possible to report the offset values to user terminals by using cell IDs that are determined from the synchronization signals (PSS/SSS). Based on the offset values (cell IDs or virtual cell IDs) derived from one of the signals above, the user terminals can specify the initial scrambling values of the common control information and/or information of the enhanced PDCCH resources where the common control information is allocated.

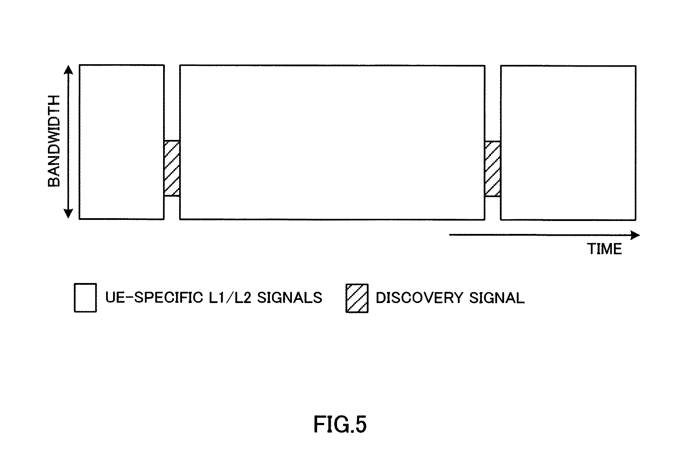

Note that the discovery signal is a signal that is defined on the downlink in the radio communication scheme for the local areas, and is a detection signal that is used by user terminals to detect the local area base station apparatuses (small base stations). The downlink discovery signal is transmitted in a comparatively long cycle (for example, in a cycle of several seconds) so that the user terminals can reduce the number of times of measurement and save the battery (see FIG. 5). Note that the arrangement of the discovery signal shown in FIG. 5 only illustrates an example, and this is by no means limiting. Also, the discovery signal may also be referred to as the "PDCH (Physical Discovery Channel)," the "BS (Beacon Signal)," the "DPS (Discovery Pilot Signal)" and so on.

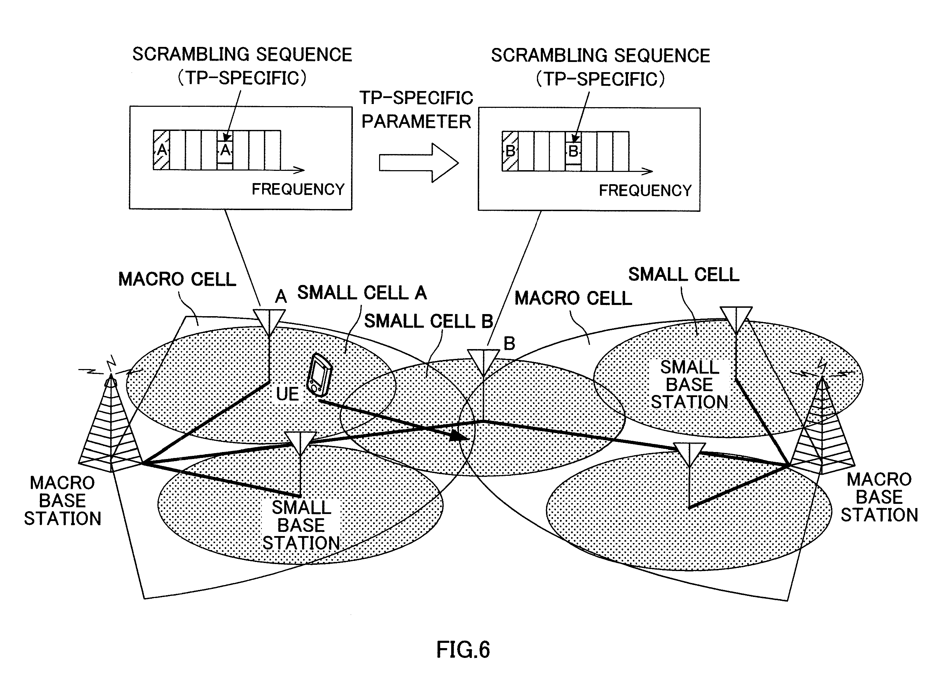

As illustrated in FIG. 6, when a user terminal moves from a small cell A to a small cell B, in small cell A, the common control information is scrambled using information that is specific to small cell A (for example, the cell ID or the virtual cell ID). Meanwhile, in small cell B, the common control information is scrambled using information that is specific to small cell B (for example, the cell ID or the virtual cell ID).

Also, the enhanced PDCCH resources where the common control information is allocated can be determined based on information that is specific to each small cell. Consequently, when a user terminal moves from small cell A to small cell B, it is possible to specify the enhanced PDCCH resources and also learn the initial scrambling values based on the offset value (the cell ID or the virtual cell ID) that is reported from small cell B. The user terminal acquires the small cell-specific information by using the discovery signal, CSI-RS configuration, synchronization signals and so on.

Note that, when common control information is transmitted from small cells to a user terminal, the user terminal can make initial access to the small cells. Obviously, it is equally possible, with the second aspect, to employ a structure to transmit common control information from the macro base station to the user terminal. In this case, the macro cell ID can be used in the scrambling process.

(Third Aspect)

In LTE Rel. 11, there is an agreement to configure a plurality of enhanced PDCCH sets (search spaces). So, with a third aspect, assuming a case where a plurality of enhanced PDCCH sets are configured, an example of transmission control for user-specific control information (UE-specific search spaces) and common control information that is shared between users (common search space) will be described.

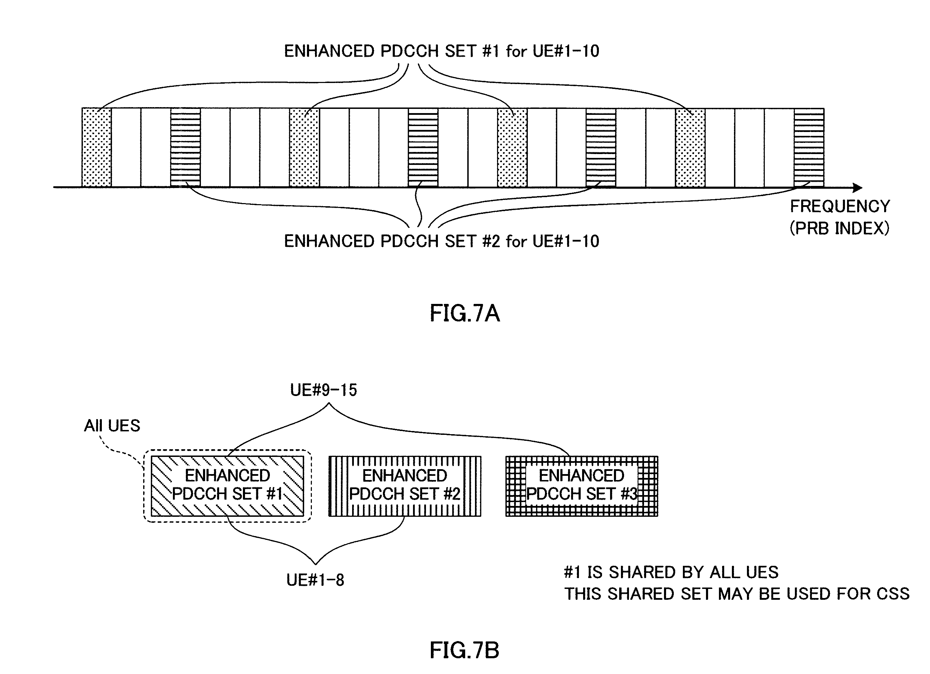

First, a plurality of ePDCCH sets will be described with reference to FIG. 7. FIG. 7A shows a case where a plurality of enhanced PDCCH sets are configured for each user terminal. As illustrated in FIG. 7A, each enhanced PDCCH set is formed to include a plurality of PRB pairs allocated to the enhanced PDCCHs. Note that an enhanced PDCCH set may also be referred to as an "enhanced PDCCH set," an "ePDCCH set," an "E-PDCCH set" and so on, or may be referred to simply as a "set."

In FIG. 7A, enhanced PDCCH set #1 and #2 are configured for each of user terminals UE #1 to #10 in an overlapping manner. In FIG. 7A, when the number of user terminals where downlink control information (DCI) is transmitted is smaller than a predetermined number, the DCI can be mapped only in one enhanced PDCCH set #1, so that the other enhanced PDCCH #2 is available for use for the PDSCH. In this way, by configuring a plurality of enhanced PDCCH sets for each user terminal in an overlapping manner, it is possible to improve the efficiency of use of radio resources.

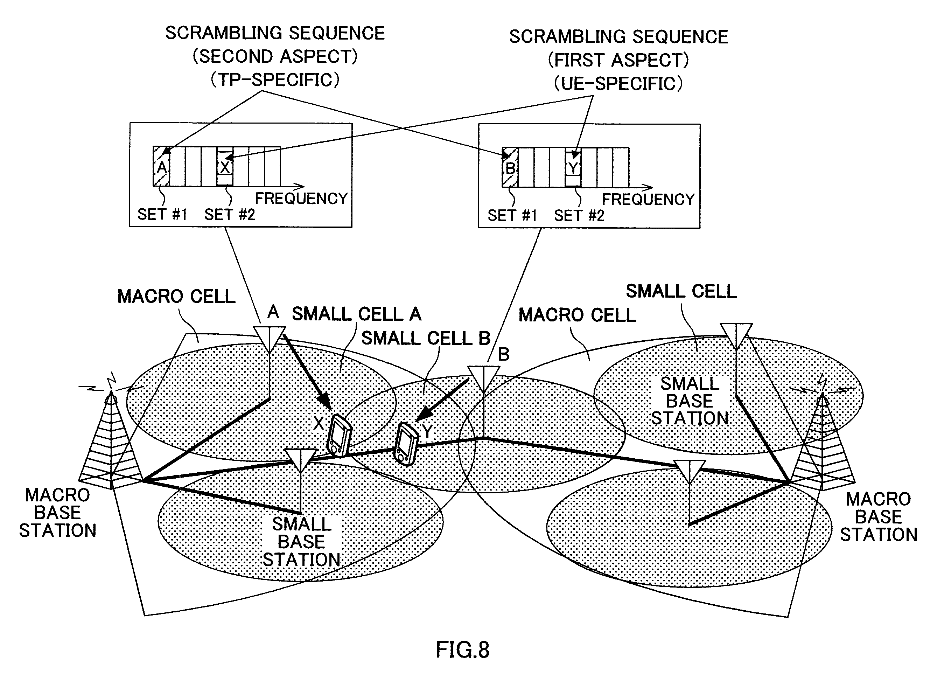

In this way, when a plurality of enhanced PDCCH sets are configured, as illustrated in FIG. 8, the above first aspect (UE-SS) is applied to a predetermined set (for example, set #1) among the plurality of sets and the above second aspect (common SS) is applied to the other set (for example, set #2).

That is, to user terminal X that is located in small cell A, user-specific control information that is scrambled by using a scrambling sequence that utilizes user X-specific information is transmitted from small base station A via the enhanced PDCCH resource of set #1. Also, common control information that is scrambled by using information that is specific to small cell A (for example, the cell ID or the virtual cell ID) is transmitted from small base station A via the enhanced PDCCH resource of set #2.

Also, to user terminal Y that is located in small cell B, user-specific control information that is scrambled by using a scrambling sequence that utilizes user Y-specific information is transmitted from small base station B via the enhanced PDCCH resource of set #1. Also, common control information that is scrambled by using information that is specific to small cell B (for example, the cell ID or the virtual cell ID) is transmitted from small base station B via the enhanced PDCCH resource of set #2.

Information about the enhanced PDCCH resource of set #1 where user-specific control information is allocated can be reported from the macro base station to user terminals X and Y. Meanwhile, the enhanced PDCCH resource and/or the initial scrambling value of set #2 where user-common control information is allocated can be determined based on the transmission point-specific information that is reported from each small base station (or the macro base station) by using discovery signals, CSI-RS configuration or synchronization signals.

By this means, even when the user terminals move between small cells in the macro cell, it is possible to make the higher layer signaling from the macro base station for reporting the enhanced PDCCH resources and cell IDs unnecessary. Also, since each user-specific control information is scrambled with information that is specific to each user, it is possible to reduce interference even when enhanced PDCCHs overlap between different user terminals.

Note that, when a plurality of enhanced PDCCH sets are configured for each user terminal, as illustrated in FIG. 7B, a primary set and a secondary set may be set for each user terminal. Here, the primary set is an enhanced PDCCH set that is configured to be shared by all the user terminals UE, and can be used as a common search space (CSS). On the other hand, the secondary set is an enhanced PDCCH set that is independently configured for at least one user terminal UE, and can be used as a user-specific search space (UE-specific SS).

In FIG. 7B, enhanced PDCCH set #1 is the primary set, and enhanced PDCCH sets #2 and #3 are the secondary sets for user terminals UE #1 to #8, and UE #9 to #15, respectively. In this case, it is possible to allocate specific control information to sets #2 and #3 (by applying the above first aspect (UE-SS)), and allocate common control information to set #1 (by applying the above second aspect (common SS)).

Note that when a plurality of enhanced PDCCH sets are configured for each user terminal UE, it is possible to report the configuration of the plurality of enhanced PDCCH sets to each user terminal UE by using a bitmap.

(Radio Communication System)

Now, the structure of the radio communication system according to the present embodiment will be described.

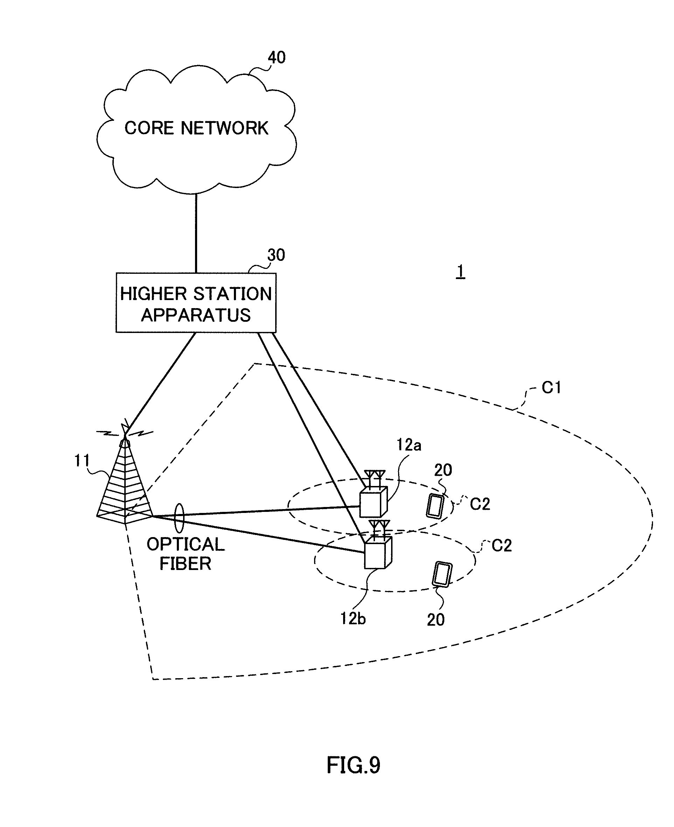

FIG. 9 is a schematic structure diagram of the radio communication system according to the present embodiment. Note that the radio communication system shown in FIG. 9 is a system to accommodate, for example, the LTE system or its successor systems. This radio communication system supports carrier aggregation, whereby a plurality of fundamental frequency blocks are grouped into one, by using the system band of the LTE system as one unit. Also, this radio communication system may be referred to as "IMT-advanced," or may be referred to as "4G."

As illustrated in FIG. 9, the radio communication system 1 has a radio base station 11 that forms a macro cell C1, and radio base station 12a and 12b that form small cells C2, which are narrow than macro cell C1. As illustrated in FIG. 9, each small cell C2 is formed to overlap macro cell C1 at least in part. The radio base station 11 and the radio base stations 12 communicate with user terminals 20 using frequency bands that overlap at least in part.

With the present embodiment, the radio base station 11 and the radio base stations 12 (which include 12a and 12b) will be referred to as the "macro base station 11" and the "small base stations 12," respectively. Note that the macro base station 11 may be referred to as an "eNodeB," a "radio base station apparatus," a "transmission point" and so on. Also, the small base stations 12 may be referred to as "pico base stations," "femto base stations," "Home eNodeBs," "RRHs (Remote Radio Heads)," "micro base stations," "transmission points" and so on.

Also, the user terminals 20 are terminals that support various communication schemes such as LTE and LTE-A, and are by no means limited to mobile communication terminals, and can be fixed communication terminals as well. With the present embodiment, a user terminal 20 will be referred to as a "user terminal 21" when connected with the macro base station 11 and referred to as a "user terminal 22" when connected with the small base stations 12, but both have the same configuration.

As illustrated in FIG. 9, the macro base station 11 and each small base station 12 are each connected with a higher station apparatus 30, and connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each small base station 12 may be connected with the higher station apparatus 30 via the macro base station 11.

Also, the macro base station 11 and each small base station 12 may be connected with each other via, for example, optical fiber, an X2 interface and so on. Although an example will be described below where the macro base station 11 and each small base station 12 are connected via wire connection such as optical fiber, they may be connected via wireless connection as well.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing the system band into bands formed with one or continuous resource blocks, per terminal, and allowing a plurality of terminals to use mutually different bands.

Signals used in the radio communication system shown in FIG. 9 will be described. Downlink signals include downlink data signals and downlink control signals. The downlink data signals include, for example, a PDSCH signal that transmits user data, higher layer control information and so on. Also, the downlink control signals include, for example, a PDCCH signal that transmits downlink control information (DCI), a PCFICH signal that transmits a control format indicator (CFI), a PHICH signal that transmits delivery acknowledgment information (ACK/NACK/DTX), and an enhanced PDCCH signal that transmits downlink control information (DCI) and that is frequency-division-multiplexed with the PDSCH signal, and so on.

Similarly, the uplink signals include uplink data signals and uplink control signals. The uplink data signals include, for example, a PUSCH (Physical Uplink Shared Channel) signal that transmits user data and higher layer control information. Also, the uplink control signals include, for example, a PUCCH (Physical Uplink Control Channel) signal that transmits downlink channel state information (CSI), delivery acknowledgment information (ACK/NACK/DTX) and so on.

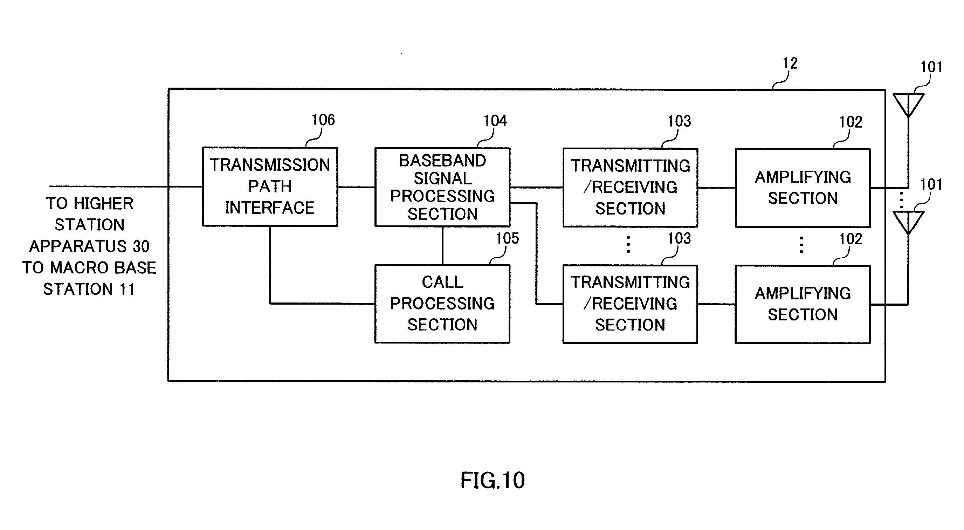

FIG. 10 is a diagram to show an overall structure of a small base station 12 according to the present embodiment. The small base station 12 has a plurality of transmitting/receiving antennas 101 for MIMO transmission, amplifying sections 102, transmitting/receiving sections 103 (transmission sections), a baseband signal processing section 104, a call processing section 105 and a transmission path interface 106.

The downlink data signals are input from the higher station apparatus 30 to the baseband signal processing section 104 via the transmission path interface 106.

The baseband signal processing section 104 performs a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process, and the result is transferred to each transmitting/receiving section 103. Furthermore, the downlink control signals are also subjected to transmission processes such as channel coding and an inverse fast Fourier transform, and transferred to each transmitting/receiving section 103.

Also, the baseband signal processing section 104 reports, to the user terminal 20, broadcast information for allowing communication in the cell, through a broadcast channel. This broadcast information includes, for example, the cell ID of the subject cell, the uplink or downlink system bandwidth and so on.

Each transmitting/receiving section 103 converts baseband signals that are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for uplink signals, radio frequency signals that are received in the transmitting/receiving antennas 101 are each amplified in the amplifying sections 102, converted into baseband signals in the transmitting/receiving sections 103 through frequency conversion, and input in the baseband signals processing section 104.

In the baseband signal processing section 104, the uplink signals included in the input baseband signals are subjected to an FFT process, an IDFT process, error correction decoding, a MAC retransmission control receiving process, and RLC layer and PDCP layer receiving processes, and the results are transferred to the higher station apparatus 30 via the transmission path interface 106. The call processing section 105 performs call processing such as setting up and releasing communication channels, manages the state of the small base station 12 and manages the radio resources.

Also, control information that is reported from the macro base station 11 to the small base station 12 is input in the baseband signal processing section 104 via the transmission path interface 106. The control information that is reported from the macro base station 11 includes, for example, the cell ID of the macro cell C1, information about the enhanced PDCCH resources configured in the macro base station 11 (for example, information about the enhanced downlink control channel resources (PRB pairs, RBGs, etc.) where user terminal-specific control information is allocated), and so on.

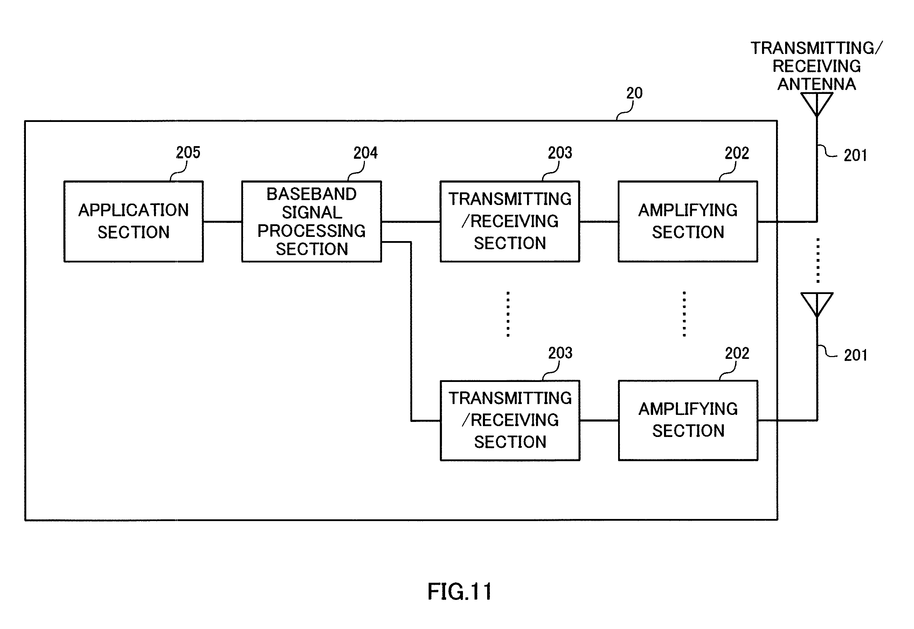

FIG. 11 is a diagram to show an overall structure of a user terminal 20 according to the present embodiment. The user terminal 20 has a plurality of transmitting/receiving antennas 201 for MIMO transmission, amplifying sections 202, transmitting/receiving sections (receiving sections) 203, a baseband signal processing section 204 and an application section 205.

As for downlink data signals, radio frequency signals that are received in the transmitting/receiving antennas 201 are each amplified in the amplifying sections 202 and converted into baseband signals through frequency conversion in the transmitting/receiving sections 203. The baseband signals are subjected to receiving processes such as an FFT process, error correction decoding and retransmission control, in the baseband signal processing section 204. The user data that is included in the downlink data signals is transferred to the application section 205. The application section 205 performs processes related to higher layers above the physical layer and the MAC layer. Also, the broadcast information that is included in the downlink data signals is also transferred to the application section 205.

Meanwhile, uplink data signals are input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the results are transferred to each transmitting/receiving section 203. The baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

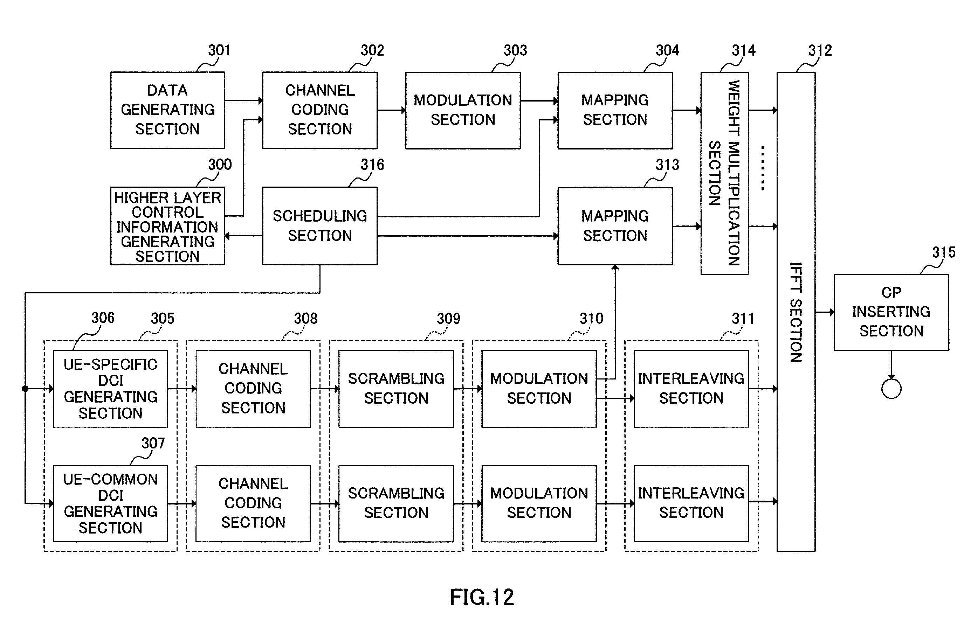

FIG. 12 is a functional structure diagram to show the baseband signal processing section 104 provided in the small base station 12 according to the present embodiment, and part of the higher layers. Note that, although FIG. 12 primarily shows downlink (transmitting) functional configurations, the small base station 12 may have uplink (receiving) functional configurations as well.

As illustrated in FIG. 12, the small base station 12 has a higher layer control information generating section 300, a data generating section 301, a channel coding section 302, a modulation section 303, a mapping section 304, a downlink control information (DCI) generating section 305, a UE-specific DCI generating section 306, a UE-common DCI generating section 307, a channel coding section 308, a scrambling section 309, a modulation section 310, an interleaving section 311, an IFFT section 312, a mapping section 313, a weight multiplication section 314, a CP inserting section 315 and a scheduling section 316.

Note that the small base station 12 does not necessarily have to have all of these configurations, and, for example, if the small base station 12 operates by receiving scheduling information from the macro base station 11, the scheduling section 316 is unnecessary. Also, when the small base station 12 uses a new carrier type for the subframe structure, downlink control information (DCI) is not allocated to the conventional PDSCH.

The higher layer control information generating section 300 generates higher layer control information on a per user terminal 20 basis. The higher layer control information is control information that is sent by higher layer signaling (for example, RRC signaling). The data generating section 301 generates downlink user data on a per user terminal 20 basis.

The downlink user data that is generated in the data generating section 301 and the higher layer control information that is generated in the higher layer control information generating section 300 are input in the channel coding section 302 as a PDSCH signal. The channel coding section 302 performs channel coding of the PDSCH signal for each user terminal 20 in accordance with coding rates that are determined based on feedback information from each user terminal 20. The modulation section 303 modulates the PDSCH signals having been subjected to channel coding in accordance with modulation schemes determined based on feedback information from each user terminal 20. The mapping section 304 maps the modulated PDSCH signal to radio resources (for example, resource elements) in accordance with commands from the scheduling section 316.

The DCI generating section 305 generates downlink control information (DCI) based on scheduling information from the scheduling section 316. Also, the DCI generating section 305 has a UE-specific DCI generating section 306 that generates UE-specific control information, and a UE-common DCI generating section 307 that generates common control information that is cell-specific. The UE-specific control information includes PDSCH allocation information (DL assignments) and PUSCH allocation information (UL grants) for each user terminal.

Also, the DCI generating section 305 can generate DCI to be transmitted in the PDCCH in control channel element (CCE) units, and generate DCI to be transmitted in the enhanced PDCCHs in enhanced control channel element (eCCE) units. Also, the sizes of CCEs and eCCEs (the number of REs) may be different or may be the same.

The channel coding section 308 performs channel coding of the downlink control signals that are input, in predetermined coding rates. To be more specific, the channel coding section 308 performs channel coding of the PDCCH signals and enhanced PDCCH signals input from the DCI generating section 305 separately.

The scrambling section 309 performs channel coding of the downlink control signals having been subjected to channel coding by using predetermined scrambling sequences. To be more specific, the scrambling section 309 scrambles the user-specific enhanced PDCCH signals (specific control information) having been subjected to channel coding, by using initial scrambling values (for example, above equation 3) that utilize information that is specific to each user (for example, CRNTIs). Also, the scrambling section 309 scrambles the user-common enhanced PDCCH signal (common control information) having been subjected to channel coding, by using an initial scrambling value (for example, above equation 4) that utilizes small base station-specific information.

The modulation section 310 modulates the scrambled downlink control information in predetermined modulation schemes. To be more specific, the modulation section 310 modulates the scrambled PDCCH signals and enhanced PDCCH signals separately. Note that the modulation section 310 outputs the modulated PDCCH signals to the interleaving section 311. Meanwhile, the modulation section 310 outputs the modulated enhanced PDCCH signals to the mapping section 313. The interleaving section 311 interleaves the modulated downlink control signals.

The mapping section 313 maps the enhanced PDCCH signals to predetermined radio resources (for example, resource elements). The enhanced PDCCH signals that are mapped in the mapping section 313 are input in the weight multiplication section 314 with the PDSCH signals mapped in the mapping section 304. The weight multiplication section 314 multiplies the PDCSH signals, enhanced PDCCH signals and demodulation reference signals by user terminal 20-specific precoding weights, and pre-codes them.

The IFFT section 312 applies an inverse fast Fourier transform process to the input signals from the interleaving section 311 and the weight multiplication section 314, and converts the signals from frequency domain signals to time sequence signals. Cyclic prefixes (CPs) to function as guard intervals are input in the output signals from the IFFT section 312 in the CP inserting section 315, and the resulting signals are output to the transmitting/receiving sections 103.

The scheduling section 316 schedules the PDSCH signals and enhanced PDCCH signals, and generates scheduling information. The scheduling section 316 outputs the generated scheduling information to the DCI generating section 305.

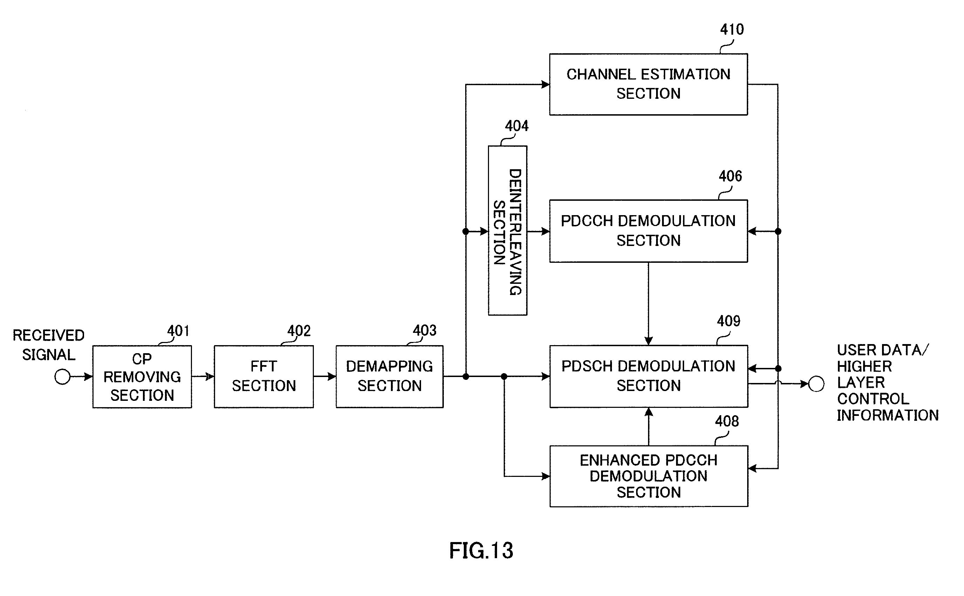

FIG. 13 is a function structure diagram of the baseband signal processing section 204 provided in the user terminal 20. Note that, although FIG. 13 primarily shows downlink (receiving) functional configurations, the user terminal 20 may have uplink (transmitting) functional configurations as well. Also, although a case will be primarily described below where the user terminal 20 connects with the small base station 12, the user terminal 20 may connect with the macro base station 11 as well.

The user terminal 20 has a CP removing section 401, an FFT section 402, a demapping section 403, a deinterleaving section 404, a PDCCH demodulation section 406, an enhanced PDCCH demodulation section 408, a PDSCH demodulation section 409 and a channel estimation section 410.

Downlink signals that are transmitted from the small base station 12 have the cyclic prefixes (CPs) removed in the CP removing section 401. The downlink signals, from which the CPs have been removed, are input in the FFT section 402. The FFT section 402 converts the downlink signals from time domain signals to frequency domain signals through a fast Fourier transform (FFT), and inputs the signals in the demapping section 403. The demapping section 403 demaps the downlink signals. Note that the demapping process in the demapping section 403 is executed based on higher layer control information that is received as input from the application section 205.

The deinterleaving section 404 deinterleaves the demapped downlink control signals. Also, the deinterleaving section 404 outputs the deinterleaved PDCCH signal to the PDCCH demodulation section 406.

The PDCCH demodulation section 406 performs blind decoding, demodulation, descrambling, channel decoding and so on of the PDCCH signal output from the deinterleaving section 404, based on the results of channel estimation in the channel estimation section 410. To be more specific, the PDCCH demodulation section 406 scrambles the PDCCH signal by using the same scrambling sequence as in the macro base station 11 or by using a scrambling sequence that is specific to the subject cell.

The enhanced PDCCH demodulation section 408 performs deinterleaving, blind decoding, demodulation, descrambling, channel decoding and so on of the enhanced PDCCH signal based on the results of channel estimation in the channel estimation section 410.

To be more specific, the enhanced PDCCH demodulation section 408 descrambles the user-specific control information by using a scrambling sequence that utilizes the user-specific information. Note that information about the enhanced PDCCH resources where the user-specific control information is allocated is reported from the macro base station 11. Also, the enhanced PDCCH demodulation section 408 descrambles the common control information that is shared between users by using a scrambling sequence that utilizes information that is specific to the small base station 12 or the macro base station 11 (for example, the cell ID or the virtual cell ID). The transmission point-specific information can be acquired by utilizing discovery signals, CSI-RS configuration information or synchronization signals.

The PDSCH demodulation section 409 performs demodulation, channel decoding and so on of the PDSCH signal output from the demapping section 403, based on the results of channel estimation in the channel estimation section 410. To be more specific, the PDSCH demodulation section 409 demodulates the PDSCH signal allocated to the subject terminal, based on the DCI demodulated in the PDCCH demodulation section 406 or in the enhanced PDCCH demodulation section 408, and acquires the downlink data (downlink user data and higher layer control information) for the subject terminal.

The channel estimation section 410 performs channel estimation by using the demodulation reference signal (DM-RS) and measurement reference signals (CRS and CSI-RS). The channel estimation section 410 outputs the channel estimation results with the measurement reference signals (CRS and CSI-RS) to the PDCCH demodulation section 406. Meanwhile, the channel estimation section 410 outputs the channel estimation result with the demodulation reference signal (DM-RS) to the PDSCH demodulation section 409 and the enhanced PDCCH demodulation section 408.

As has been described above, with the radio communication system 1 according to the present embodiment, the small base stations 12 scramble user terminal-specific control information, which is allocated to enhanced PDCCHs, by using initial scrambling values that utilize information specific to each user, and transmit the results to user terminals in predetermined enhanced PDCCHs. Also, a user terminal acquires information about the enhanced PDCCH resource where the control information specific to the user terminal is allocated from the macro base station 11, and descrambles the user-specific control information that is received, by using information that is specific to the user. By this means, even when user terminals move between varying small cells, the enhanced PDCCH resources that are configured for each user terminal do not change, so that it is possible to make the higher layer signaling for reporting enhanced PDCCH resource information and cell IDs unnecessary. Also, since the user-specific control information that is allocated to enhanced PDCCHs is scrambled with information that is specific to each user, it is possible to reduce interference even when the enhanced PDCCHs overlap between different user terminals.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention. Also, the above first aspect, second aspect and third aspect may be applied in various adequate combinations. That is to say, the descriptions herein are provided only for the purpose of explaining examples, and should by no means be construed to limit the present invention in any way.

The disclosure of Japanese Patent Application No. 2012-230080, filed on October 17, 2012, including the specification, drawings and abstract, is incorporated herein by reference in its entirety.

**Claims**

1. A radio communication method in a radio communication system comprising a macro base station that forms a macro cell and a small base station that forms a small cell such that at least part of the small cell overlaps the macro cell, the radio communication method comprising, in the small base station, the steps of:

generating specific control information of user terminals;
scrambling the specific control information by using user-specific scrambling sequences; and
transmitting the specific control information to user terminals in the small cell by using an enhanced downlink control channel that is frequency-division-multiplexed with a downlink shared data channel.

2. The radio communication method according to claim 1, wherein the macro base station reports information about enhanced downlink control channel resources where the specific control information is allocated, to user terminals in the macro cell.

3. The radio communication method according to one of claim 1 and claim 2, wherein initial values of the user-specific scrambling sequences are defined by following equation 3:

$$c_{\text{init}} = n_{RNTI} \cdot 2^{13} + \left\lfloor n_s/2 \right\rfloor \cdot 2^9 + N_{\text{ID}}^{\text{cell}} \quad \ldots \; (\text{Equation } 3)$$

where
$n_{RNTI}$ is user-specific information;
$n_s$ is a slot number; and
$N_{\text{ID}}^{\text{cell}}$ is a cell ID or a virtual cell ID.

4. The radio communication method according to claim 1, further comprising, in the small base station, the steps of:

generating common control information that is shared between user terminals;
scrambling the common control information by using a scrambling sequence that utilizes information specific to the small base station; and
transmitting the common control information to the user terminals in the small cell by using the enhanced downlink control channel that is frequency division multiplexed with the downlink shared data channel.

5. The radio communication method according to claim 4, wherein an initial value of the scrambling sequence that utilizes information specific to the small base station is defined by following equation 4:

$$c_{\text{init}} = \left\lfloor n_s/2 \right\rfloor \cdot 2^9 + N_{\text{ID}}^{\text{cell}} \quad\quad\quad \ldots \; (\text{Equation } 4)$$

6. The radio communication method according to one of claim 4 and claim 5, wherein the small base station reports the information specific to the small base station to user terminals by utilizing a discovery signal, a channel state information measurement reference signal configuration, or a synchronization signal.

7. The radio communication method according to claim 4, wherein a plurality of enhanced downlink control channel sets are configured for a user terminal, and the specific control information is allocated to at least one set among the plurality of enhanced downlink control channel set, while the common control information is allocated to at least one different set.

8. A radio communication system comprising a macro base station that forms a macro cell and a small base station that forms a small cell such that at least part of the small cell overlaps the macro cell, wherein the small base station comprises:

a generating section that generates specific control information of user terminals;
a scrambling section that scrambles the specific control information by using user-specific scrambling sequences; and
a transmission section that transmits the specific control information to user terminals in the small cell by using an enhanced downlink control channel that is frequency-division-multiplexed with a downlink shared data channel.

9. A small base station that forms a small cell such that at least part of the small cell overlaps a macro cell formed by a macro base station, the small base station comprising:

a generating section that generates specific control information of user terminals;

a scrambling section that scrambles the specific control information by using user-specific scrambling sequences; and

a transmission section that transmits the specific control information to user terminals in the small cell by using an enhanced downlink control channel that is frequency-division-multiplexed with a downlink shared data channel.

**10.** A user terminal that connects with a macro base station that forms a macro cell and a small base station that forms a small cell such that at least part of the small cell overlaps the macro cell, the user terminal comprising:

a receiving section that receives, from the small base station, control information that is specific to user terminals and that is scrambled by using user-specific scrambling sequences, and that also receives, from the macro base station, information about enhanced downlink control channel resources where the specific control information is allocated; and

a demodulation section that demodulates user data that is allocated to the downlink shared data channel by using the specific control information.

MACRO BASE STATION

SMALL CELL

SMALL BASE STATION

MACRO CELL

SMALL CELL

MACRO CELL

UE

SMALL BASE STATION

MACRO BASE STATION

FIG.1

FREQUENCY

PDCCH

TIME

SUBFRAME

1 TO 3 OFDM SYMBOLS

PDSCH

ENHANCED PDCCH
(FDM-TYPE PDCCH)

PDSCH

FIG.2A

ENHANCED PDCCH     PDSCH

PRB     0     1     2     3     4     5     6     7     8     9     10

FIG.2B

FIG.3

SCRAMBLING SEQUENCE
(UE-SPECIFIC)

SCRAMBLING SEQUENCE
(UE-SPECIFIC)

FREQUENCY

FREQUENCY

MACRO CELL

SMALL CELL

MACRO CELL

SMALL CELL

MACRO
BASE
STATION

SMALL
BASE
STATION

SMALL
BASE
STATION

MACRO
BASE
STATION

FIG.4

EP 2 911 463 A1

FIG.5

UE–SPECIFIC L1/L2 SIGNALS    DISCOVERY SIGNAL

SCRAMBLING SEQUENCE
(TP-SPECIFIC)

SCRAMBLING SEQUENCE
(TP-SPECIFIC)

TP-SPECIFIC
PARAMETER

FREQUENCY

FREQUENCY

MACRO CELL

SMALL CELL A

SMALL CELL B

MACRO CELL

SMALL CELL

A

B

SMALL
BASE
STATION

UE

MACRO
BASE
STATION

SMALL
BASE
STATION

MACRO
BASE
STATION

FIG.6

EP 2 911 463 A1

ENHANCED PDCCH SET #1 for UE#1-10

FREQUENCY
(PRB INDEX)

ENHANCED PDCCH SET #2 for UE#1-10

FIG.7A

UE#9-15

All UES

ENHANCED
PDCCH SET #1

ENHANCED
PDCCH SET #2

ENHANCED
PDCCH SET #3

UE#1-8

#1 IS SHARED BY ALL UES
THIS SHARED SET MAY BE USED FOR CSS

FIG.7B

EP 2 911 463 A1

SCRAMBLING SEQUENCE
(SECOND ASPECT)
(TP-SPECIFIC)

SCRAMBLING SEQUENCE
(FIRST ASPECT)
(UE-SPECIFIC)

A      X

FREQUENCY

SET #1   SET #2

B      Y

FREQUENCY

SET #1   SET #2

MACRO CELL

A  SMALL CELL A
   SMALL CELL B

MACRO CELL

SMALL CELL

X

Y

B

SMALL
BASE
STATION

MACRO
BASE
STATION

SMALL
BASE
STATION

MACRO
BASE
STATION

FIG.8

EP 2 911 463 A1

FIG.9

FIG.10

FIG.11

FIG.12

FIG.13

EP 2 911 463 A1

## INTERNATIONAL SEARCH REPORT

| International application No. |
| --- |
| PCT/JP2013/077122 |

A. CLASSIFICATION OF SUBJECT MATTER
*H04W72/04*(2009.01)i, *H04J13/10*(2011.01)i, *H04W16/32*(2009.01)i

According to International Patent Classification (IPC) or to both national classification and IPC

B. FIELDS SEARCHED

Minimum documentation searched (classification system followed by classification symbols)
H04B7/24-7/26, H04W4/00-99/00, H04J13/10

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | Alcatel-Lucent, Alcatel-Lucent Shanghai Bell, CATT, Nokia, NSN,Samsung, Panasonic, TI, ZTE, PDSCH scrambling randomization, 3GPP TSG-RAN WG1#70b, R1-124613, 2012.10.08 | 1-10 |
| A | Huawei, HiSilicon, CATT, Intel, New Postcom, Hitachi, WF on ePDCCH DMRS Scrambling Initialization, 3GPP TSG-RAN WG1#70b, R1-124160, 2012.10.08 | 1-10 |
| A | Huawei, HiSilicon, Remaining details of CSI-RS configuration, 3GPP TSG-RAN WG1#68b, R1-120984, 2012.03.26 | 1-10 |
| A | New Postcom, Downlink reference signal enhancements for CoMP, 3GPP TSG-RAN WG1#67, R1-113700, 2011.11.14 | 1-10 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 11 December, 2013 (11.12.13) | 24 December, 2013 (24.12.13) |

| Name and mailing address of the ISA/<br>   Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012230080 A

**Non-patent literature cited in the description**

- Requirements for Evolved UTRA and Evolved UTRAN. *3GPP TR 25.913*